# EUROPEAN PATENT SPECIFICATION

(11) **EP 4 577 820 B1**
(45) Date of publication and mention of the grant of the patent: **20.05.2026**
(21) Application number: 23731703.7
(22) Date of filing: 13.06.2023
(51) Int. Cl.: G01N 1/30

(54) **STAINING REAGENT**
FÄRBEREAGENZ
RÉACTIF DE COLORATION

(30) Priority: 07.11.2022 DE 102022129378; 06.02.2023 US 202363483411 P
(43) Date of publication of application: 02.07.2025
(73) Proprietor: Bio-Gram Hematology GmbH, 67550 Worms (DE)
(72) Inventor: CUCU, Bayram, 65582 Diez (DE); GOUNALAKIS, Charilaos, 67067 Ludwigshafen (DE); BLAKAJ, Petrit, 68542 Heddesheim (DE)
(74) Representative: Reiser & Partner Patentanwälte mbB
(86) International application number: PCT/EP2023/065821
(87) International publication number: WO 2024/099595

(56) References cited:
- WO-A1-2011/010064
- CN-A- 103 808 551
- FR-A1- 2 887 333
- US-A1- 2005 250 757

## Description

The invention relates to a staining reagent for performing histological and/or hematological staining.

In the field of histology, i.e. the examination of biological tissues, staining methods are used to better distinguish tissue structures during an optical examination. In this context, various staining methods are known, for example H&E staining (hematoxylin and eosin staining). With this staining method, for example, cell nuclei of the tissue to be examined appear in a blue-purple color and cytoplasm in pink. Intercellular substances are also stained, for example cartilage turns purple, or fibers pink. Likewise, staining is used in the field of hematology, i.e. the examination of blood, bone marrow and other body fluids as well as body tissues.

The samples to be examined are placed on a slide and are then stained with different staining reagents or staining methods, depending on the examination method. In order to achieve optimum staining, it is important to adhere exactly to the method intended for the staining, in particular the staining duration and the amount of staining reagent applied. For this purpose, devices are known by means of which slides with biological samples adhering to them can be automatically stained.

Such a staining reagent is known from EP 2 457 079 B1. The staining component of the stain is usually a pigment dissolved in a liquid, which can be conveyed by a peristaltic pump or the like and easily applied to a slide. Depending on the pigment, said stain attaches itself to different structures of the object to be stained, so that the structures to be examined stand out more clearly and the objects are easier to microscope. The staining reagent known from prior art is an alcoholic solution based on isopropanol, a monohydric alcohol. The use of other monohydric alcohols, for example methanol or ethanol, is also known. A disadvantage of monohydric alcohols is that alcohol vapors are formed during the staining process, which can be harmful to the health of the operating personnel.

It is the object of the invention to provide a staining reagent for performing histological staining which has improved handling.

The object is solved with the features of claim 1. The subclaims refer to advantageous embodiments.

The staining reagent according to the invention for performing histological and/or hematological staining comprises the components dimethyl sulfoxide in a proportion of 55 vol.% to 99.95 vol.% and staining pigments in a proportion of 0.05 vol.% to 7 vol.%. In a further advantageous embodiment, the proportion of dimethyl sulfoxide is preferably of 55 vol.% to 99.99 vol.% and the proportion of staining pigments is preferably of 0.01 vol.% to 7 vol.% and alcohols in the form of sugar alcohols.

The quantity of staining pigments can be alternatively indicated in weight percentage, which is a different way of representing the amount of staining pigments within the staining reagent. Volume percentage can be converted to weight percentage using the volume-to-mass relationship, which is proportional to density (mass = density × volume). At 20 °C, dimethyl sulfoxide has a density of 1.1 g/mL, whereas typical used staining pigments (like methylene blue, eosin and azure blue) have a density of about 1 g/mL. Based on these typical exemplary values, the staining reagent according to the invention for performing histological and/or hematological staining comprises staining pigments in a proportion of 0.045 w.% to 6.4 w.%. In a further advantageous embodiment, the proportion of staining pigments is preferably of 0.009 w.% to 6.4 w.%. These values may deviate slightly depending on the densities, for example if other staining pigments are used or if the temperature deviates.

Alternatively, the amount of staining pigments can be specified directly in mass. For example, 2.5 g staining pigment can be dissolved in 1 l dimethyl sulfoxide, which corresponds at 20 °C to 1,100 g dimethyl sulfoxide, resulting in a weight percentage of 0.23 w.%.

In the staining reagent according to the invention, dimethyl sulfoxide (DMSO, CAS No. 67-68-5) serves as solvent and the staining pigments are dissolved in the DMSO. A higher proportion of DMSO ensures improved solubility of the staining pigments and leads to better staining results. Surprisingly, it was found that it is not necessary, in particular, to add a base in the form of a monohydric alcohol to the staining reagent. DMSO begins to crystallize and change to the solid phase at temperatures below 18 °C. A large amount of DMSO allows the staining pigments to be stably bound in the at least partially crystallized solution, which improves the shelf life of the staining reagent at temperatures below 18 °C.

The proportion of DMSO is preferably in a range from 70 vol.% to 90 vol.%, particularly preferably in a range from 75 vol.% to 85 vol.%, in particular 80 vol.%. The proportion of staining pigment is preferably in the range from 0.5 vol.% to 5 vol.%, in particular in the range from 1 vol.% to 3 vol.%, in particular 2 vol.%.

An advantageous embodiment of the invention provides that the staining reagent further comprises water. The water is preferably demineralized water or deionized water. The addition of water reduces the amount of DMSO, wherein the beneficial effects of DMSO are effective even when water is added; at the same time, the manufacturing costs of the staining reagent can be reduced.

The proportion of water can range from 0.1 vol.% to 35 vol.%. The proportion of water is preferably in a range from 5 vol.% to 25 vol.%, particularly in a range from 5 vol.% to 30 vol.%, particularly in a range from 10 vol.% to 30 vol.%, particularly preferable in a range from 15 vol.% to 25 vol.%, in particular 20 vol.%. With the above proportions of water, the proportion of DMSO in the staining reagent is sufficiently large to preserve the positive properties of DMSO as a solvent, in particular with respect to the staining pigments on the staining reagent.

The proportion of alcohols is preferably at most 5 vol.%, in particular at most 0.5 vol.%. Preferably, alcohol is not actively added to the staining reagent during the manufacturing process, but may be present as an accompanying substance in other additives of the staining reagent. Surprisingly, studies have shown that DMSO as a solvent leads to particularly good staining results, but has the disadvantageous properties of alcohols, in particular the formation of alcohol vapors which are hazardous to health. Accordingly, the handling of the staining reagent is improved because the proportion of monohydric alcohols usually used for staining reagents, for example methanol, ethanol or isopropanol, whose alcohol vapors can be harmful to health, can be eliminated.

In this respect, the staining reagent according to the invention can be free of monohydric alcohols.

According to the present invention the staining reagent contains alcohols in the form of sugar alcohols. Sugar alcohols are polyhydric alcohols which are known, for example, as sugar substitutes. The proportion of sugar alcohols in the staining reagent is low, however, and is preferably no more than 5 vol.%. Particularly suitable as a sugar alcohol in this context is glycerol. In contrast to methanol, ethanol or isopropanol, glycerol is not a hazardous substance, so that the easy handling of the staining reagent according to the invention is not impaired. In particular, staining reagents provided with pigments for Giemsa staining can have a proportion of glycerol added to them during the manufacturing process, which acts as a stabilizer and improves the staining result of the Giemsa staining. Apart from the polyhydric alcohols, in particular sugar alcohols, no other alcohols, in particular no monohydric alcohols, are preferably added to the staining reagent.

The DMSO can have a purity of more than 90 %. The staining results of the staining reagent correlate with the purity of DMSO, wherein the quality of the staining results improve as the purity of DMSO increases. Good staining results can already be achieved at a purity of more than 95 %, wherein such DMSO is particularly cost-effective. Better staining results at reasonable cost can be achieved at 99 % purity. At a purity of 99.9 %, the quality of the staining results is improved even further, but DMSO at this level of purity is very expensive. Purity of DMSO beyond 99.9 % no longer appears economically viable due to the high manufacturing costs of high purity DMSO. Impurities can occur during the manufacturing process of DMSO and may result from synthesis residues. Typical impurities include water and traces of cations.

The staining pigments may be selected from eosin and/or erythrosine and/or methylene blue and/or azure blue I and/or from a stain belonging to the group of thiazines. In particular, the staining pigments may be selected from methylene blue (CAS No. 61-73-4), eosin G (CAS No. 17372-87-1), azure A (CAS No. 531-55-5) and/or 3-methylamino-7-dimethylaminophenothiazine-5-ium chloride. With these staining pigments, good results of the stainings could be achieved. The choice of the staining pigments depends on the staining method to be carried out.

The staining reagent may comprise a stabilizer. The stabilizer is used to extend the shelf life and improve the storability of the staining reagent. In particular, the stabilizer prevents contamination of the staining reagent, for example by bacterial and/or fungal attack. This allows good staining results to be maintained over a long period of time. An antibiotic can be considered as a stabilizer, for example gentamicin.

Surfactants are also conceivable as stabilizers. Surfactants act to lower and stabilize the melting point of the staining reagent. Among other things, the attachment of the surfactant to the surface of the staining reagent can reduce the oxidation of the dissolved staining pigment with oxygen. Furthermore, a biocide from the group of isothiazolinones can also be selected, in particular polyoxyethylene (20) sorbitan monooleate (CAS No. 2682-20-4). The proportion of stabilizer is preferably in a range of 0.05 vol.% to 7 vol.%.

The staining reagent may comprise a stabilizing buffer. The stabilizing buffer maintains the pigments dissolved in the staining reagent in a preselected pH range, preferably in a range from pH 4.5 to pH 6, particularly preferably in a range from pH 6 to pH 6.5. The proportion of stabilizing buffer is preferably in the range from 0.05 vol.% to 1.5 vol.%.

An amino acid in the form of L-histidine (CAS No. 71-00-1) is particularly suitable as a buffering substance. The substance does not act as a stabilizing buffer itself, but is used to lower the pH value of the stabilizing buffer.

The staining reagent is explained in more detail below. The figures show, each schematically:
- Fig. 1: a blood smear after Giemsa staining performed with a staining reagent according to the invention, the image was taken with an oil immersion objective;
- Fig. 2: a blood smear after May-Grünwald staining, performed with a staining reagent according to the invention, the image was taken with an oil immersion objective;
- Fig. 3: a blood smear after Wright's staining, performed with a staining reagent according to the invention, the image was taken with an oil immersion objective.

The staining reagent contains the components dimethyl sulfoxide (DMSO) with a purity of more than 90 % and a proportion of the staining reagent in a range of 55 vol.% to 99.95 vol.% and staining pigments in a range of 0.05 vol.% to 7 vol.%. In a further advantageous embodiment, the proportion of dimethyl sulfoxide is preferably of 55 vol.% to 99.99 vol.% and the proportion of staining pigments is preferably of 0.01 vol.% to 7 vol.%.

The proportion of staining pigments in the staining reagent can be between 0.05 vol.% and 0.25 vol.% of staining reagent. When stirred, the ingredients produce a homogeneous mixture without reacting chemically with each other. The staining pigments are present in the initial state as solids and are dissolved in the DMSO so that the staining reagent is present as a solution.

The staining pigments may be selected from eosin and/or erythrosine and/or methylene blue and/or azure blue I and/or from a stain belonging to the group of thiazines. In particular, the staining pigments may be selected from methylene blue (CAS No. 61-73-4), eosin G (CAS No. 17372-87-1), azure A (CAS No. 531-55-5) and/or 3-methylamino-7-dimethylaminophenothiazine-5-ium chloride. The selection of the staining pigments depends on the staining method to be carried out.

The staining reagent may further comprise water. The percentage of water in the staining reagent may range from 0.1 vol.% to 35 vol.%.

The staining reagent may contain polyhydric alcohols in the form of sugar alcohols. The sugar alcohol content is preferably not more than 5 vol.%.

The staining reagent may comprise a stabilizer. The proportion of stabilizer is preferably in a range of 0.05 vol.% to 7 vol.%.

The staining reagent may comprise a stabilizing buffer. The proportion of stabilizing buffer is preferably in the range from 0.05 vol.% to 1.5 vol.%.

The staining reagent can be used in a device for staining. A device for staining biological samples adhered to a slide comprises a staining apparatus for staining the biological samples. The staining apparatus comprises a staining plate or staining chamber in which at least one opening is provided. When the staining reagent is conveyed through the opening towards a staining surface, it spreads evenly over the surface of the slide and stains the biological structures. The staining methods are always carried out at room temperature, so that the DMSO, which crystallizes below 18 °C, is present in liquid form.

Specific compositions of the staining reagent with which good staining results can be obtained are shown in Table 1 below. The volume proportions of the components refer to a temperature of 21 °C. The proportions given in vol.% comprise the tolerances permissible in the field of staining reagent production.

**Table 1**

| | DMSO | | Staining pigment | Water | Stabilizer | Stabilizing buffer | Polyhydric alcohols |
|---|---|---|---|---|---|---|---|
| | Proportion | Purity | | | | | |
| | (vol. %) | (%) | (vol.%) | (vol. %) | (vol. %) | (vol.%) | (vol. %) |
| 1 | 70 | 97.0 | 3.0 | 18.0 | 3.0 | 1.0 | 5.0 |
| 2 | 70 | 98.0 | 2.0 | 19.7 | 2.5 | 0.8 | 5.0 |
| 3 | 70 | 99.9 | 1.0 | 21.0 | 2.0 | 1.0 | 5.0 |
| 4 | 80 | 97.0 | 0.9 | 17.0 | 1.1 | 1.0 | 0 |
| 5 | 80 | 99.9 | 2.0 | 15.0 | 2.0 | 1.0 | 0 |
| 6 | 90 | 97.0 | 1.0 | 8.2 | 0.3 | 0.5 | 0 |
| 7 | 90 | 99.0 | 1.0 | 5.0 | 2.6 | 1.4 | 0 |
| 8 | 95 | 99.0 | 1.0 | 2.0 | 1.5 | 0.5 | 0 |
| 9 | 95 | 99.0 | 1.0 | 2.0 | 1.5 | 0.5 | 0 |
| 10 | 95 | 99.0 | 1.0 | 1.0 | 2.2 | 0.8 | 0 |
| 11 | 98 | 99.0 | 1.0 | 0.5 | 0.25 | 0.25 | 0 |

Very good staining results can be obtained with all of the staining reagents listed in the table, and the staining reagent is equally well suited for all staining methods. Accordingly, the compositions of selected examples are explained in more detail below by way of example only.

### Example 1 (Composition 3)

The staining reagent of composition 3 contains
- 70 vol.% DMSO,
- 1 vol.% staining pigments,
- 21 vol.% water,
- 2 vol.% stabilizer,
- 1 vol.% stabilizing buffer and
- 5 vol.% alcohol.

The staining pigments are based on methylene blue (CAS No. 61-73-4). Alternatively, the staining pigments may contain eosin, erythrosine, methylene blue, azure blue I and/or a stain belonging to the group of thiazines. In this example, DMSO is present in a purity of 99.9 %. The stabilizer is gentamicin, and the stabilizing buffer is L-histidine. The alcohol is a polyhydric alcohol in the form of a sugar alcohol, namely glycerol.

### Example 2 (Composition 4)

The staining reagent of composition 4 contains
- 80 vol.% DMSO,
- 0.9 vol.% staining pigments,
- 17 vol.% water,
- 1.1 vol.% stabilizer and
- 1 vol.% stabilizing buffer.

The staining pigments are eosin G (CAS No. 17372-87-1). Alternatively, the staining pigments may contain eosin, erythrosine, methylene blue, azure blue I and/or a stain belonging to the group of thiazines. DMSO is present in a purity of 97%. The stabilizer is gentamicin, and the stabilizing buffer is L-histidine. The staining reagent is free of monohydric alcohol, here it is also free of polyhydric alcohol.

### Example 3 (Composition 8)

The staining reagent of composition 3 contains
- 95 vol.% DMSO,
- 1 vol.% staining pigments,
- 2 vol.% water,
- 1.5 vol.% stabilizer and
- 0.5 vol.% stabilizing buffer.

The staining pigments are azure A (CAS No. 531-55-5). Alternatively, the staining pigments may contain eosin, erythrosine, methylene blue, azure blue I and/or a stain belonging to the group of thiazines. DMSO is present in a purity of 99 %. The stabilizer is polyoxyethylene (20) sorbitan monooleate (CAS No. 2682-20-4), and the stabilizing buffer is L-histidine. The staining reagent is free of monohydric alcohol, here it is also free of polyhydric alcohol.

Experiments have shown that a staining reagent with less than 20 vol.% DMSO is not sufficient to achieve good staining results. At contents above 20 vol.% DMSO and a water content above 70 vol.%, the stability of the staining pigment is compromised. The higher the water content in the staining reagent, the faster the pigment loses its oxidation ability and the staining performance is significantly reduced. In addition, the shelf life is extremely shortened.

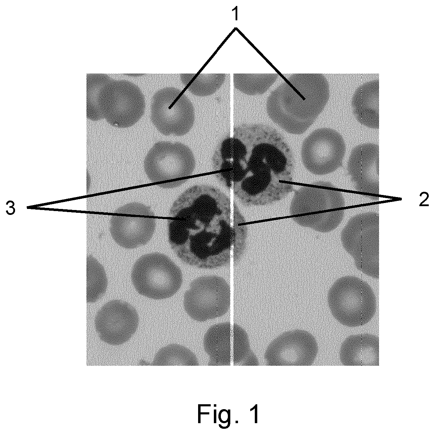

Figure 1 shows a blood smear after Giemsa staining with a staining reagent according to the invention. The Giemsa stain is a stain for bone marrow and blood smears and cytological material such as urine sediment. The structures stained and examined by the staining reagent according to the invention are particularly sharply defined and clearly recognizable. Staining is used in particular to distinguish different cell types from each other so that, for example, cell nuclei and cytoplasm can be easily distinguished. Used staining materials of Giemsa staining are for example azure A eosinate, azure B eosinate and methylene blue eosinate.

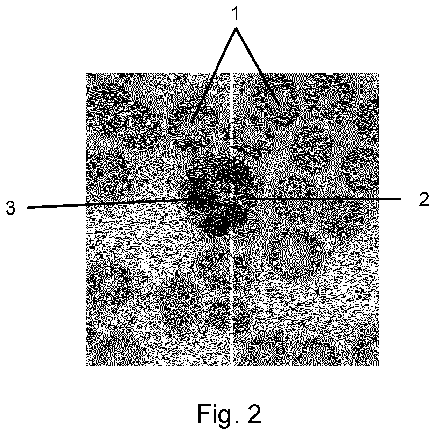

Figure 2 shows a blood smear after May-Grünwald staining with a staining reagent according to the invention. May-Grünwald staining is a staining used to visualize and distinguish between different blood cells. The structures stained and examined by the staining reagent according to the invention are particularly sharply defined and clearly recognizable. With this staining, cell nuclei and cytoplasm are stained. Staining materials used in May-Grünwald staining are, for example, methylene blue and eosin Y or eosin B and azure A (3-methylamino-7-dimethylaminophenothiazin-5-ium chloride).

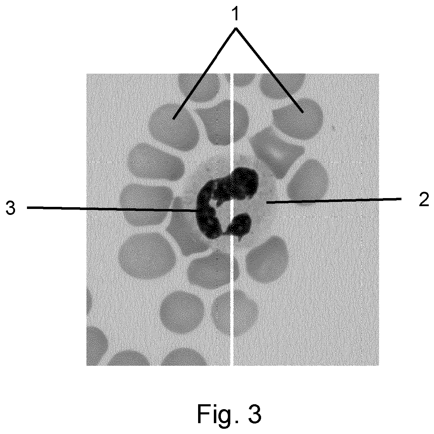

Figure 3 shows a blood smear after Wright's staining with a staining reagent according to the invention. Here, too, the structures stained by the staining reagent according to the invention and to be examined are particularly sharply defined and clearly recognizable. Wright's staining is mainly used for blood smears and bone marrow biopsies. In the process, the cell nuclei are stained. Used staining materials of Wright's staining are for example methylene blue and eosin Y, eosin B and azure A (3-methylamino-7-dimethylaminophenothiazin-5-ium chloride).

Red and white blood cells 1, 2 are shown in the figures. The red and white blood cells 1, 2 are shown in a disc shape. This predominantly involves red blood cells 1, which do not have a nucleus. In addition, isolated white blood cells 2 appear. The white blood cells 2 comprise a nucleus 3. The white blood cells 2 have about twice the diameter of the red blood cells 1.

It can be seen clearly that the staining reagent makes the edges of the red and white blood cells 1, 2 stand out particularly contour-strong and enables sharp differentiation. Bumps or fraying in the borders are also clearly visible. Furthermore, the nuclei 3 of the white blood cells 2 are sharply demarcated from the white blood cell 2.

## Claims

1. A staining reagent for performing histological and/or hematological staining comprising the components:
- dimethyl sulfoxide with a content of 55 vol.% to 99.99 vol.% and
- staining pigments with a content of 0.01 vol.% to 7 vol.%,
**characterized in that** the staining reagent contains alcohols in the form of sugar alcohols.

2. The staining reagent according to claim 1, **characterized in that** the content of dimethyl sulfoxide is between 55 vol.% and 99.95 vol.% and the content of the staining pigments is between 0.05 vol.% and 7 vol.%.

3. The staining reagent according to claim 1 or 2, **characterized in that** the staining reagent comprises water.

4. The staining reagent according to any of claims 1 to 3, **characterized in that** the proportion of water in the staining reagent is in a range from 0.1 vol.% to 35 vol.%.

5. Staining reagent according to any of claims 1 to 4, **characterized in that** the proportion of alcohols in the staining reagent is at most 5 vol.%.

6. The staining reagent according to any of claims 1 to 5, **characterized in that** the dimethyl sulfoxide has a purity of more than 90 %.

7. The staining reagent according to any of claims 1 to 6, **characterized in that** the proportion of staining pigments in the staining reagent is between 1 vol.% to 3 vol.%.

8. The staining reagent according to any of claims 1 to 7, **characterized in that** the staining pigments are selected from eosin and/or erythrosine and/or methylene blue and/or azure blue I and/or from a stain belonging to the group of thiazines.

9. The staining reagent according to any of claims 1 to 8, **characterized in that** the staining reagent comprises a stabilizer.

10. The staining reagent according to any of claims 1 to 9, **characterized in that** the staining reagent comprises a stabilizing buffer.

## Patentansprüche

1. Färbereagenz zum Durchführen von histologischen und/oder hämatologischen Färbungen, umfassend die Bestandteile:
- Dimethylsulfoxid mit einem Anteil von 55 Vol. % bis 99,99 Vol. % und
- Färbepigmente mit einem Anteil von 0,01 Vol. % bis 7 Vol. %,
**dadurch gekennzeichnet, dass** das Färbereagenz Alkohole in Form von Zuckeralkoholen enthält.

2. Färbereagenz nach Anspruch 1, **dadurch gekennzeichnet, dass** der Anteil an Dimethylsulfoxid zwischen 55 Vol. % und 99,95 Vol. % liegt und der Anteil an Färbepigmenten zwischen 0,05 Vol. % und 7 Vol. % liegt.

3. Färbereagenz nach Anspruch 1 oder 2, **dadurch gekennzeichnet, dass** das Färbereagenz Wasser umfasst.

4. Färbereagenz nach einem der Ansprüche 1 bis 3, **dadurch gekennzeichnet, dass** der Anteil von Wasser an dem Färbereagenz in einem Bereich von 0,1 Vol. % und 35 Vol. % liegt.

5. Färbereagenz nach einem der Ansprüche 1 bis 4, **dadurch gekennzeichnet, dass** der Anteil von Alkoholen an dem Färbereagenz höchstens 5 Vol. % beträgt.

6. Färbereagenz nach einem der Ansprüche 1 bis 5, **dadurch gekennzeichnet, dass** das Dimethylsulfoxid eine Reinheit von mehr als 90 % aufweist.

7. Färbereagenz nach einem der Ansprüche 1 bis 6, **dadurch gekennzeichnet, dass** der Anteil der Färbepigmente an dem Färbereagenz zwischen 1 Vol. % bis 3 Vol. % beträgt.

8. Färbereagenz nach einem der Ansprüche 1 bis 7, **dadurch gekennzeichnet, dass** die Färbepigmente aus Eosin und/oder Erythrosin und/oder Methylenblau und/oder Azurblau I und/oder aus einem Farbstoff ausgewählt sind, der zur Gruppe der Thiazine gehört.

9. Färbereagenz nach einem der Ansprüche 1 bis 8, **dadurch gekennzeichnet, dass** das Färbereagenz einen Stabilisator umfasst.

10. Färbereagenz nach einem der Ansprüche 1 bis 9, **dadurch gekennzeichnet, dass** das Färbereagenz einen Stabilisierungs-Puffer umfasst.

## Revendications

1. Réactif de coloration permettant d'effectuer une coloration histologique et/ou hématologique comprenant les composants suivants :
- sulfoxyde de diméthyle avec une teneur allant de 55 % en volume à 99,99 % en volume et
- pigments de coloration avec une teneur allant de 0,01 % en volume à 7 % en volume,
**caractérisé en ce que** le réactif de coloration contient des alcools sous forme d'alcools de sucre.

2. Réactif de coloration selon la revendication 1, **caractérisé en ce que** la teneur en sulfoxyde de diméthyle est comprise entre 55 % en volume et 99,95 % en volume et la teneur en pigments de coloration est comprise entre 0,05 % en volume et 7 % en volume.

3. Réactif de coloration selon la revendication 1 ou 2, **caractérisé en ce que** le réactif de coloration comprend de l'eau.

4. Réactif de coloration selon l'une quelconque des revendications 1 à 3, **caractérisé en ce que** la proportion d'eau dans le réactif de coloration se situe dans une plage allant de 0,1 % en volume à 35 % en volume.

5. Réactif de coloration selon l'une quelconque des revendications 1 à 4, **caractérisé en ce que** la proportion d'alcools dans le réactif de coloration est d'au plus 5 % en volume.

6. Réactif de coloration selon l'une quelconque des revendications 1 à 5, **caractérisé en ce que** le sulfoxyde de diméthyle a une pureté supérieure à 90 %.

7. Réactif de coloration selon l'une quelconque des revendications 1 à 6, **caractérisé en ce que** la proportion de pigments de coloration dans le réactif de coloration est comprise entre 1 % en volume et 3 % en volume.

8. Réactif de coloration selon l'une quelconque des revendications 1 à 7, **caractérisé en ce que** les pigments de coloration sont choisis parmi éosine et/ou érythrosine et/ou bleu de méthylène et/ou bleu azur I et/ou à partir d'une coloration appartenant au groupe des thiazines.

9. Réactif de coloration selon l'une quelconque des revendications 1 à 8, **caractérisé en ce que** le réactif de coloration comprend un agent stabilisant.

10. Réactif de coloration selon l'une quelconque des revendications 1 à 9, **caractérisé en ce que** le réactif de coloration comprend un tampon de stabilisation.
